# EUROPÄISCHE PATENTSCHRIFT

(11) **EP 3 093 102 B1**
(45) Veröffentlichungstag und Bekanntmachung des Hinweises auf die Patenterteilung: **27.09.2017**
(21) Anmeldenummer: 15167237.5
(22) Anmeldetag: 12.05.2015
(51) Int. Cl.: B23Q 1/76

(54) **LÜNETTE**
STATIONARY SUPPORT
LUNETTE

(43) Veröffentlichungstag der Anmeldung: 16.11.2016
(73) Patentinhaber: SMW-Autoblok Spannsysteme GmbH, 88074 Meckenbeuren (DE)
(72) Erfinder: MAURER, Eckhard, 88094 Oberteuringen (DE); MARQUART, Jürgen, 88677 Markdorf (DE)
(74) Vertreter: Engelhardt & Engelhardt

(56) Entgegenhaltungen:
- EP-A1- 2 540 438
- EP-A1- 2 848 359
- DE-A1- 3 543 806

## Beschreibung

Die Erfindung bezieht sich auf eine Lünette nach dem Oberbegriff des Patentanspruches 1 (siehe z.B. DE-3543806-A). Solche Lünetten sind beispielsweise aus der EP 2848359 A1 zu entnehmen, durch die ein rotationssymmetrisches Werkstück im Raum zentriert gehalten und abgestützt ist. Solche Werkstücke sind Wellen oder Hohlkörper, deren Außenmantelfläche mittels Werkzeugen zu bearbeiten ist, wodurch erhebliche Bearbeitungskräfte entstehen, die auf das eingespannte Werkstück einwirken und dieses durchbiegen. Oftmals sind solche Werkstücke mehrere Meter lang, so dass die zur Abstützung der Werkstücke erforderlichen Lünetten in einem vorgegebenen Abstand zueinander im Bereich des Werkzeugbettes einer Werkzeugmaschine angeordnet sind.

Das Werkzeugbett einer Werkzeugmaschine stellt jedoch einen begrenzten Raum zur Verfügung, der mit weiteren Elementen zu bestücken ist, so dass die Bauraumgröße der Lünette an das zur Verfügung stehende Platzangebot der Werkzeugmaschine anzupassen ist. Darüberhinaus sind die Lünetten entweder in vertikaler Richtung oder seitlich geringfügig versetzt zu dieser auszurichten, um das zu haltende Werkstück von unten zu umfassen und zu zentrieren.

Die Lünetten bestehen zu diesem Zweck im Wesentlichen aus zwei Gehäuseschalen, in denen drei Lünettenarme beweglich angeordnet sind. Die Lünettenarme stehen in einer trieblichen Wirkverbindung mit einem pneumatisch oder hydraulisch betriebenen Druckkolben, durch den die drei Lünettenarme synchron mittels eines Führungsschlittens in Richtung des einzuspannenden Werkstückes oder von diesem weg bewegbar sind.

Der mittlere Lünettenarm wird demnach axial hin- und herverfahren und die zwei äu-ßeren Lünettenarme liegen an der Außenseite des Führungsschlittens auf und führen eine schwenkbare Bewegung bei der Betätigung des Führungsschlittens aus. An zwei gegenüberliegenden Außenseiten des Führungsschlittens ist nämlich eine Steuerbahn angearbeitet, auf denen jeweils einer an den freien Enden des äußeren Lünettenarms angeordnete Laufrollen aufliegen und auf der Steuerbahn abrollt. Durch die Zustellung des Führungsschlittens werden demnach die beiden äußeren Lünettenarme, die drehbar an den Gehäuseschalen gelagert sind, in Richtung des Werkstückes zugestellt bzw. geschwenkt.

Sobald die drei Lünettenarme gleichzeitig auf die Werkzeugoberfläche auftreten, entstehen Spannkräfte, durch die das Werkstück gehalten ist.

Je größer der Durchmesser des einzuspannenden Werkstückes ist, desto größer baut die Lünette, denn dann sind erhebliche Verschwenkwinkel für die beiden äußeren Lünettenarme erforderlich und auch der axiale Zustellweg des Druckkolbens und des mittleren Lünettenarms ist entsprechend zu vergrößern. Der zur Verfügung stehende Bauraum an einer Werkzeugmaschine ist jedoch begrenzt und es ist erforderlich, die Lünette zum einen möglichst klein zu bauen, um weiteren Bauraum für andere technische Aufgaben an der Werkzeugmaschine zur Verfügung zu haben und zum anderen soll durch die Lünette eine möglichst große Verschwenkmöglichkeit der Lünettenarme gegeben sein, um unterschiedlich groß ausgestaltete Werkstücke einzuspannen, ohne dass die Lünetten permanent ein- und auszubauen sind, wenn sich der Durchmesser des einzuspannenden Werkstückes verkleinert oder vergrößert.

Es ist daher Aufgabe der Erfindung, eine Lünette der eingangs genannten Gattung derart weiterzubilden, dass durch diese Werkstücke mit unterschiedlich groß bemessenen Durchmessern gehalten und zentriert werden können und dass der Bauraum der Lünette möglichst gering bemessen ist, um die Werkstücke mit unterschiedlichen Durchmessern umgreifen und abstützen zu können.

Diese Aufgabe ist erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass die jeweilige Steuerbahn des Führungsschlittens mindestens zwei Steuerabschnitte aufweist und dass an dem jeweiligen äußeren Lünettenarm mindestens zwei zueinander beabstandete Laufrollen angeordnet sind, die mit jeweils einem der Steuerabschnitte in Wirkkontakt stehen in Abhängigkeit von der Position des Führungsschlittens in den Gehäuseschalen, ist die Bauraumgröße der Lünette unter Beibehaltung eines möglichst großen Schwenkbereiches der äußeren Lünettenarme erreicht, denn die Ausrichtung der jeweiligen Steuerabschnitte der Steuerbahn ist in Abhängigkeit von der Zustellposition des Führungsschlittens ausgerichtet, so dass die Lünettenarme, insbesondere die beiden äußeren Lünettenarme, einen möglichst großen Schwenkbereich durchlaufen und folglich unterschiedlich groß bemessene Werkstücke einspannen können.

Da die Laufrollen der jeweiligen äußeren Lünettenarme permanent entweder einzeln oder paarweise an einem der den Laufrollen jeweils zugeordneten Steuerabschnitten anliegen, sind die Lünettenarme permanent trieblich mit dem Führungsschlitten verbunden, so dass die Lünettenarme sowohl in Richtung des Werkstückes als auch entgegengesetzt zu diesem bewegbar sind. Der Führungsschlitten wirkt demnach nicht nur als Zustellelement sondern auch als Rückholeinrichtung für die drei Lünettenarme.

Aufgrund der konstruktiven Ausgestaltung der Steuerbahnen, insbesondere des Übergangsbereiches zwischen zwei benachbarten Steuerbahnen, ist erreicht, dass die Laufrollen entweder einzeln oder paarweise auf zwei benachbarten Steuerabschnitten anliegen, wodurch eine gleichmäßige Bewegung des Führungsschlittens möglich ist bei unterschiedlich groß bemessenen Verschwenkwegen der beiden äußeren Lünettenarme, da die entsprechenden Steuerabschnitte unterschiedlich zueinander geneigt bzw. bezogen auf die Längsachse der Gehäuseschalen ausgerichtet sind.

In der Zeichnung sind zwei erfindungsgemäße Ausführungsbeispiele einer Lünette dargestellt, die nachfolgend näher erläutert sind. Im Einzelnen zeigt:
- Figur 1: ein erstes Ausführungsbeispiel einer Lünette mit zwei Gehäuseschalen, zwischen denen ein Betätigungskolben, ein Führungsschlitte und ein an diesem angebrachten mittleren Lünettenarm axial beweglich gelagert sind und aus zwei äußeren Lünettenarmen, die trieblich mit dem Führungsschlitten verbunden sind, in perspektivischer und in Explosions-Darstellung,
- Figur 2a: die Lünette gemäß Figur 1 in einer ersten Position für ein einzuspannendes Werkstück mit einem groß bemessenen Durchmesser, im Schnitt,
- Figur 2b: die Lünette gemäß Figur 2a in einer zweiten Position für ein Werkstück mit einem mittleren bemessenen Durchmesser,
- Figur 2c: die Lünette gemäß Figur 2a in einer dritten Position für ein Werkstück mit einem klein bemessenen Durchmesser und
- Figur 3: ein zweites Ausführungsbeispiel einer Lünette mit zwei Gehäuseschalen, zwischen denen ein Betätigungskolben, ein Führungsschlitten und ein mittlerer Lünettenarm axial verstellbar gelagert sind und mit zwei trieblich mit dem Führungsschlitten verbundenen äußeren Lünettenarmen, im Schnitt.

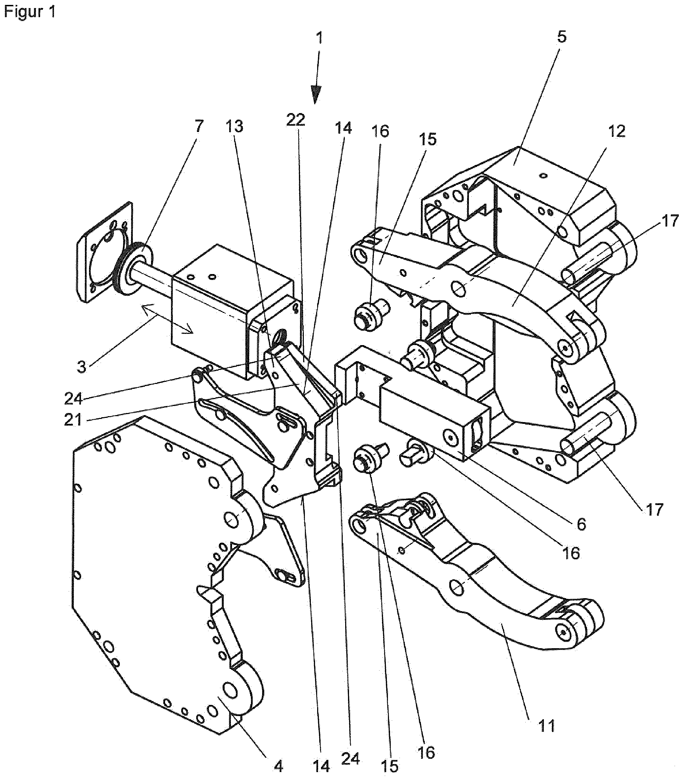

Aus Figur 1 ist eine Lünette 1 zu entnehmen, durch die ein Werkstück 2 im Raum zentrisch abzustützen oder zu halten ist, so dass die Längsachse des Werkstückes 2 möglichst geradlinig, also ohne durchzubiegen, verläuft. Bei den Werkstücken 2 handelt es sich um rotationssymmetrische Wellen oder Hohlkörper, die von einer nicht dargestellten Werkzeugmaschine bearbeitet werden. Oftmals übt die Werkzeugmaschine erhebliche Bearbeitungskräfte auf das Werkstück 2 aus, die von der Lünette 1 aufzunehmen sind, ohne dass die Längsachse des Werkstückes 2 verschoben ist, denn dadurch sind die präzisen Bearbeitungsschritte nicht durchführbar.

Die Lünette 1 besteht aus zwei Gehäuseschalen 4 und 5 die beabstandet zueinander angeordnet sind und einen Raum einschließen. Die Gehäuseschalen 4 und 5 sind fest miteinander verbunden. Desweiteren bilden die Gehäuseschalen 4 und 5 eine Längsachse 10, die senkrecht zu der Rotationsachse des Werkstückes 2 auszurichten ist, um eine zuverlässige Befestigung der Lünette 1 an dem Werkstück 2 zu erreichen.

Darüberhinaus besteht die Lünette 1 aus einem Betätigungskolben 7 der beispielsweise pneumatisch oder hydraulisch mit einem Druckmedium beaufschlagt ist und der fluchtend zu der Längsachse 10 der Gehäuseschalen 4, 5 verläuft. Durch den Betätigungskolben 7 wird eine axiale Hubbewegung erzeugt, die in Richtung des Werkstückes 2 oder von diesem weg ausgerichtet ist und die mit der Bezugsziffer 3 in den Figuren gekennzeichnet ist.

An dem Betätigungskolben 7 ist ein mittlerer Lünettenarm 6 befestigt, der somit in trieblicher Wirkverbindung mit den Betätigungskolben 7 steht und von diesen in Bewegungsrichtung 3 axial in Richtung des Werkstückes 2 oder von diesem wegbewegbar ist. Der mittlere Lünettenarm 6 bildet demnach eine erste Auflage für das Werkstück 2.

Zwei weitere von dem mittleren Lünettenarm 6 notwendigen Auflager werden durch zwei äußere Lünettenarme 11, 12 gebildet, die mittels eines Gelenkes 17 drehbar oder verschwenkbar an den Gehäuseschalen 4 und 5 gelagert sind.

Um die beiden äußeren Lünettenarme 11, 12 synchron mit dem mittleren Lünettenarm 6 zu bewegen, ist an dem Betätigungskolben 7 ein Führungsschlitten 13 angebracht, der eine dachförmige oder V-förmige Außenkontur aufweist, wobei die Spitze des Daches oder des V benachbart zu dem Werkstück 2 angeordnet ist und die Seitenflächen des Führungsschlittens 13 bezogen auf die Längsachse 10 ansteigen.

Die gegenüberliegenden Außenflanken des Führungsschlittens 13 sind als Steuerbahn 14 ausgestaltet, auf denen jeweils an den freien Enden 15 der äußeren Lünettenarmen 11, 12 angebrachte Laufrollen 16 abrollen und permanent anliegen, wie dies nachfolgend näher erläutert ist.

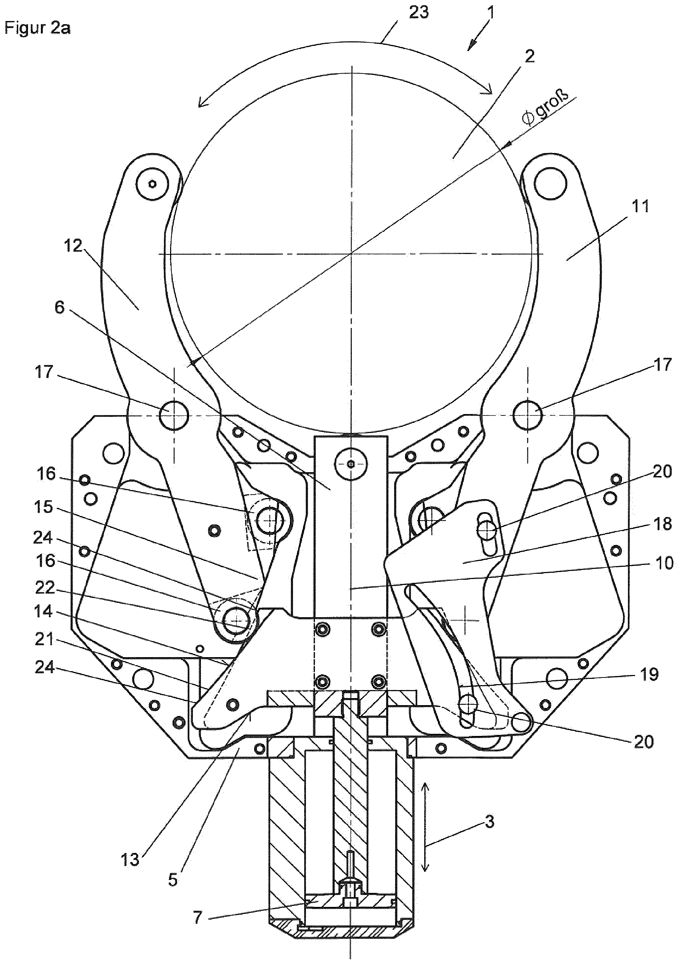

Aus Figur 2a ist ersichtlich, dass an den freien Enden 15 der äußeren Lünettenarme 11, 12 zwei Laufrollen 16 beabstandet zueinander vorgesehen sind.

Die Steuerbahn 14 ist in zwei Steuerabschnitte 21 und 22 sowie einen Übergangsbereich 24, der zwischen den beiden Steuerabschnitten 21 und 22 positioniert ist, gebildet. Jeweils eine der Laufrollen 16 der Lünettenarme 11,12 sind einem der Steuerabschnitte 21 oder 22 zugeordnet und wirken trieblich mit diesem zusammen. Die von dem Werkstück 2 am weitesten entfernt angeordnete Laufrolle 16 liegt dabei auf dem ersten Steuerabschnitt 21 auf und wird an diesem unter Vorspannung gehalten, und zwar beispielsweise durch eine Schraubendruckfeder oder einer Spiralfeder im Gelenk 17 der äußeren Lünettenarme 11, 12.

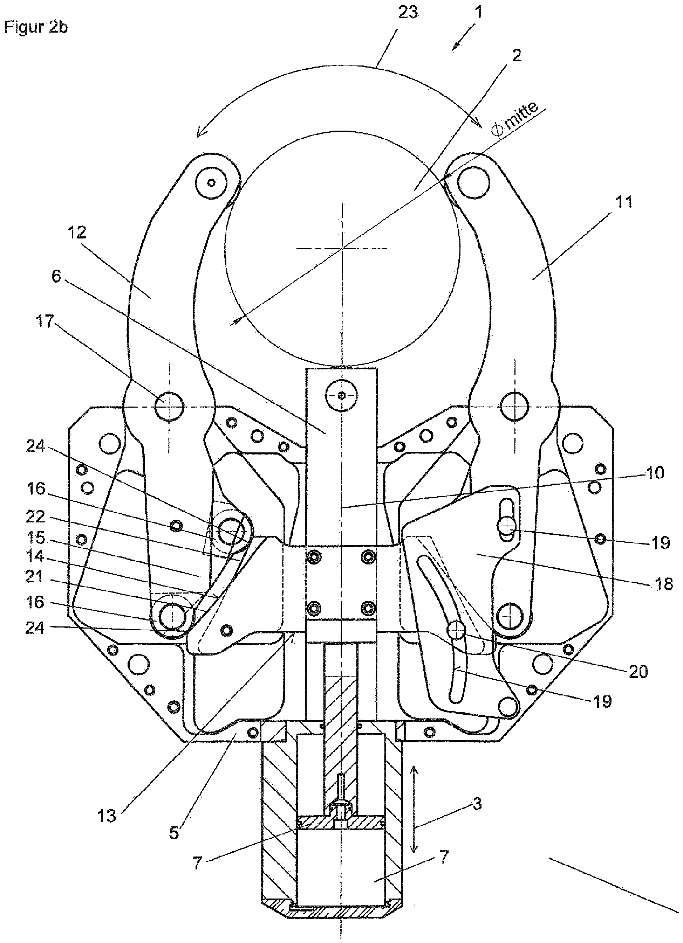

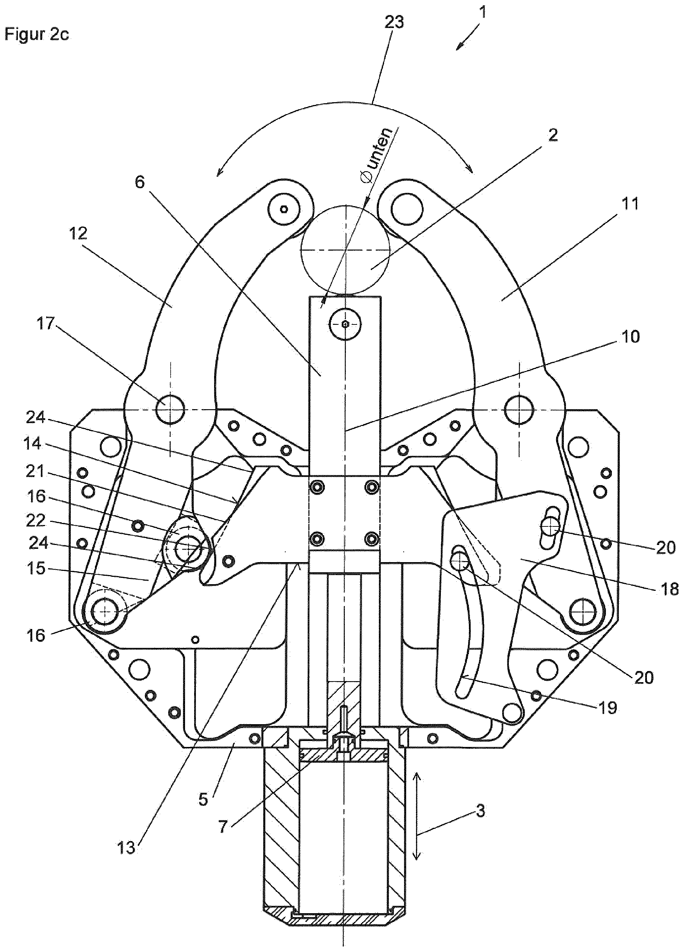

Darüberhinaus ist Figur 2a zu entnehmen, dass ein Werkstück 2 mit einem groß bemessenen Durchmesser, beispielsweise von 600 mm eingespannt ist, so dass durch die Größe des Werkstückes 2 die Position des Führungsschlittens 13 in den Gehäuseschalen 4 und 5 vorgegeben ist, denn je kleiner der Durchmesser der einzuspannenden Werkstücke 2 ausfällt, wie dies in den Figuren 2b und 2c abgebildet ist, ändert sich die Position des Führungsschlittens 13 in den Gehäuseschalen 4 und 5.

Somit gelangen die Laufrollen 16, die von dem Werkstück 2 am weitesten entfernt positioniert sind, in dem Einspannzustand gemäß Figur 2a ausschließlich in Wirkkontakt bzw. in Anlage mit dem ersten Steuerabschnitt 21 des Führungsschlittens 13.

Aus Figur 2b ist ein Werkstück 2 mit einem mittleren Durchmesser, beispielsweise 300 mm, zu entnehmen, so dass die Position des Führungsschlittens 13 in den Gehäuseschalen 4, 5 bezogen auf den Einspannzustand der Figur 2a näher an dem Werkstück 2 positioniert ist. Folglich gelangen auch die benachbart zu dem Werkstück 2 angeordneten Laufrollen 16 der äußeren Lünettenarme 11, 12 in Wirkkontakt bzw. zur Anlage mit dem diesem zugeordneten zweiten Steuerabschnitt 22. In diesem Einspannzustand liegen somit beide zueinander beabstandeten Laufrollen 16 der äußeren Lünettenarme 11 und 12 an ihrem jeweiligen Steuerabschnitt 21 bzw. 22 an und übertragen die von dem Betätigungskolben 7 über den Führungsschlitten 13 erzeugte Einspannkräfte.

Durch Figur 2c soll verdeutlicht werden, dass auch klein bemessene Werkstücke 2, beispielsweise mit einem Durchmesser von 80 mm mit Hilfe der erfindungsgemäßen Lünette 1 zuverlässig eingespannt werden können. Die Position des Führungsschlittens 13 in den Gehäuseschalen 4 und 5 ist bei diesen Werkstücken 2 am nächsten zu diesen angeordnet, so dass ausschließlich die zu dem Werkstück 2 benachbarten Laufrollen 16 zur Anlage bzw. in Wirkkontakt mit ihrem zweiten Steuerabschnitt 22 stehen bzw. gelangen und die weiter entfernt angeordneten Laufrollen 16 nicht mehr in Wirkkontakt mit dem Führungsschlitten bzw. dem dort angearbeiteten ersten Steuerabschnitt 21 stehen.

Die Neigungen der zwei benachbarten Steuerabschnitte 21 und 22 ist daher bezogen auf die Längsachse 10 unterschiedlich ausgestaltet. Folglich weisen die Steuerabschnitte 21 und 22 verschiedenartige Steigungs- oder Neigungswinkel auf, die dazu führen, dass die Verschwenkbewegung der äußeren Lünettenarme 11 und 12 in Abhängigkeit von den in Wirkkontakt stehenden Steuerabschnitten 21 oder 22 bzw. der Position der Laufrollen 16 entweder an dem Steuerabschnitt 21 oder 22 automatisch verändert ist. Aufgrund dieser konstruktiven Ausgestaltung der Steuerbahn 14 ist folglich erreicht, dass verschieden groß bemessene Werkstücke 2 mit einer Lünette 1 abstützbar sind, ohne dass die Bauraumgröße der Lünette 1 gegenüber dem bislang bekannten Lünetten zu verändern ist. Alleine durch die konstruktive Ausgestaltung der Neigungen oder Steigungen der Steuerabschnitte 21, 22 ist folglich die Vergrößerung des Verschwenkbereiches, der mit der Bezugsziffer 23 der äußeren Lünettenarme 11 und 12 gekennzeichnet ist, vergrößert.

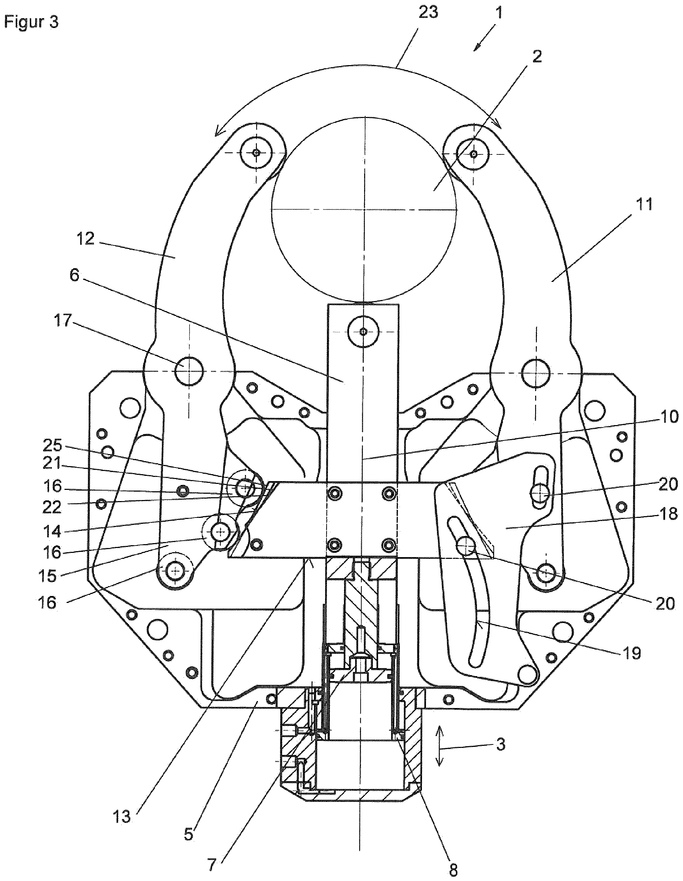

In Figur 3 ist eine Lünette 1 abgebildet, deren Führungsschlitten 13 eine Steuerbahn 14 mit drei Steuerabschnitten 21, 22 und 25 aufweist. An den freien Enden 15 der äußeren Lünettenarme 11, 12 sind demnach drei Laufrollen 16 beabstandet zueinander angeordnet, die jeweils einem der Steuerabschnitte 21, 22 oder 25 zugeordnet sind und mit diesem in Wirkkontakt stehen, sobald die entsprechende Position des Führungsschlittens 13 erreicht ist.

Allen Steuerbahnen 14 der Figuren 1 bis 3 ist gemeinsam, dass die Länge der Steuerbahn 14 in etwa dem Abstand von zwei benachbarten Laufrollen 16 bzw. der von den beiden äußeren Laufrollen 16 gebildeten Länge entspricht.

Eine Vielzahl von unterschiedlich ausgestalteten Steuerabschnitten 21, 22 oder 25 kann an dem Führungsschlitten 13 angearbeitet sein, die sowohl linear, konkav oder konvex gekrümmt oder wellenförmig ausgestaltet werden können, in Abhängigkeit von dem gewünschten Verschwenkbereich 23 der äußeren Lünettenarme 11, 12 in dem jeweiligen Steuerabschnitt 21, 22 bzw. 25.

In den Figuren 2a, 2b und 2c ist zudem zu entnehmen, dass an dem Führungsschlitten 13 eine Rückholeinrichtung 18 angebracht ist, also mit dieser in trieblicher Wirkverbindung steht. Die Rückholeinrichtung 18 weist eine Führungsnut 19 auf, in die ein Bolzen 20 eingesetzt ist, der fest mit dem jeweiligen äußeren Lünettenarm 11 bzw. 12 verbunden ist. Sobald demnach der Führungsschlitten 13 zurückgezogen ist, wird über den Bolzen 20 der äußeren Lünettenarme 11, 12 eine Rückstellkraft übertragen, durch die der Bolzen 20 aufgrund der Innenkontur der Führungsnut 19 der Rückholeinrichtung 18 nach innen gelenkt wird, so dass die äußeren Lünettenarme 11, 12 um das Gelenk 17 nach außen geöffnet bzw. geschwenkt sind.

Zudem ist der Betätigungskolben 7 teleskopartig ausgestaltet. Somit besteht der Betätigungskolben 7 aus einem ersten Teil 31 und einem zweiten Teil 32, die relativ zueinander beweglich sind, denn jeder Teil 31 bzw. 32 des Betätigungskolbens 7 ist einem voneinander getrennten Druckraum 33 bzw. 34 zugeordnet. In jeden der beiden Druckräume 33 und 34 münden Leitungen 35 ein, die über eine Steuereinrichtung bzw. eine Pumpe mit einem Druckmedium, beispielsweise Hydrauliköl, befüllbar oder entleerbar sind. Sobald demnach in den ersten Druckraum 33 Hydrauliköl durch die Pumpe eingepresst ist, bewegt sich der erste Teil 31 des Betätigungskolbens 7 in Richtung des Werkstückes 2 und verfährt gleichzeitig den zweiten Teil 32. Der im Druckraum 33 vorgesehene Verstellweg oder Hubweg des ersten Teils 31 des Betätigungskolbens 7 ist durch einen Anschlag 36 begrenzt. Sobald daher die Endposition des ersten Teils 31 des Betätigungskolbens 7 an dem Anschlag 36 erreicht ist, wird in den zweiten Druckraum 34 Hydrauliköl eingepresst, so dass sich der zweite Teil 32 des Betätigungskolbens 7 in Richtung des Werkstückes 2 bewegt, wodurch sowohl der noch möglicherweise zu überbrückende Betätigungsweg der Lünettenarme 6, 11 und 12 überbrückt ist und zum anderen die notwendige Spannkraft auf die drei Lünettenarme 6, 11 und 12 erzeugt ist.

Aufgrund der teleskopartigen Ausbildung des Betätigungskolbens 7 ist der für diesen erforderliche Bauraum erheblich verringert unter Beibehaltung der notwendigen Länge des Hubweges.

## Patentansprüche

1. Lünette (1) zur Zentrierung eines rotationssymmetrischen Werkstückes (2) im Raum,
bestehend aus:
- zwei zueinander beabstandet angeordneten und fest miteinander verbundenen Gehäuseschalen (4, 5),
- einem zwischen den beiden Gehäuseschalen (4, 5) angeordneten mittleren Lünettenarm (6), der mittels eines Betätigungskolbens (7) in axialer Bewegungsrichtung (3) auf das Werkstück (2) verschiebbar in den Gehäuseschalen (4, 5) gelagert ist, und
- zwei äußeren Lünettenarmen (11, 12), die mit dem mittleren Lünettenarm (6) trieblich über einen Führungsschlitten (13) verbunden sind, der an zwei gegenüberliegenden Außenseiten eine Steuerbahn (14) aufweist, auf der eine an den freien Enden (15) der beiden äußeren Lünetten (11, 12) angebrachte und an der Steuerbahn (14) abrollende Laufrolle (16) angeordnet ist,
**dadurch gekennzeichnet,**
**dass** die jeweilige Steuerbahn (14) des Führungsschlittens (13) mindestens zwei Steuerabschnitte (21, 22, 25) aufweist und dass an dem jeweiligen äußeren Lünettenarm (11, 12) mindestens zwei zueinander beabstandete Laufrollen (16) vorgesehen sind, die mit jeweils einem der Steuerabschnitte (21, 22, 25) in Wirkkontakt gelangen in Abhängigkeit von der Position des Führungsschlittens (13) in den Gehäuseschalen (4, 5).

2. Lünette nach Anspruch 1,
**dadurch gekennzeichnet,**
**dass** die Steuerabschnitte (21, 22, 25) der jeweiligen Steuerbahn (14) eine zueinander unterschiedliche Steigung oder Neigung bezogen auf die Längsachse (10) der Gehäuseschalen (4, 5) aufweisen und dass der Übergangsbereich (24) zwischen zwei benachbarten Steuerabschnitten (21, 22 oder 25) derart ausgestaltet ist, dass in dem Übergangsbereich (24) die beiden benachbarten Laufrollen (16) eines der äußeren Lünettenarme (11 oder 12) an dem jeweiligen Steuerabschnitt (21, 22 oder 25) gleichzeitig anliegen.

3. Lünette nach Anspruch 2,
**dadurch gekennzeichnet,**
**dass** durch die axiale Zustellbewegung des Führungsschlittens (13) der Wirkkontakt bzw. die Anlage der Laufrollen (6) an dem jeweiligen Steuerabschnitt (21, 22, 25) der Steuerbahn (14) erzeugt ist und dass die Anlage zwischen der vom Werkstück (2) am weitesten entfernt liegenden Laufrolle (16) gelöst ist, sobald der Führungsschlitten (13) in Richtung des Werkstückes (2) weiter zugestellt ist.

4. Lünette nach einem der vorgenannten Ansprüche,
**dadurch gekennzeichnet,**
**dass** die Länge der Steuerbahn (14) etwa den Abstand zwischen zwei benachbarten Laufrollen (16) entspricht.

5. Lünette nach einem der vorgenannten Ansprüche,
**dadurch gekennzeichnet,**
**dass** die die Steuerbahn (14) bildenden Außenseiten des Führungsschlittens (13) in Richtung der Längsachse (10) jeweils mit unterschiedlichen Neigungswinkeln ausgerichtet sind und dass die beiden gegenüberliegenden Steuerbahnen (14) des Führungsschlittens (13) prinzipiell eine V-förmige Außenkontur aufweisen, dessen Spitze auf der Längsachse (10) und benachbart zu dem einzuspannenden Werkstück (2) liegt.

6. Lünette nach einem der vorgenannten Ansprüche,
**dadurch gekennzeichnet,**
**dass** der jeweilige Steuerabschnitt (21, 22, 25) geradlinig, konkav oder konvex gekrümmt oder wellenförmig ausgestaltet ist.

7. Lünette nach einem der vorgenannten Ansprüche,
**dadurch gekennzeichnet,**
**dass** die beiden äußeren Lünettenarme (11, 12) an einem Gelenk (17) drehbar an den Gehäuseschalen (4, 5) gelagert sind und dass das Gelenk (17) räumlich zwischen dem Führungsschlitten (13) und dem einzuspannenden Werkstück (2) angeordnet ist.

8. Lünette nach einem der vorgenannten Ansprüche,
**dadurch gekennzeichnet,**
**dass** die beiden äußeren Lünettenarme (11, 12) unter Vorspannung stehen, die vorzugsweise mittels einer Spiralfeder oder einer Schraubendruckfeder erzeugt ist, durch die die jeweilige Laufrolle (16) der Lünettenarme (11, 12) in Richtung der Steuerbahn (14) des Führungsschlittens (13) gedrückt ist.

9. Lünette nach einem der vorgenannten Ansprüche,
**dadurch gekennzeichnet,**
**dass** der Betätigungskolben (7) aus einem ersten Teil (31) und einem zweiten Teil (32) gebildet ist, die teleskopartig ineinander gelagert sind und dass die beiden Teile (31, 32) des Betätigungskolbens (7) jeweils einen voneinander getrennten Druckraum (33 bzw. 34) zugeordnet sind.

10. Lünette nach Anspruch 9,
**dadurch gekennzeichnet,**
**dass** die beiden Druckräume (33 und 34) unabhängig voneinander mit einem Druckmedium befüllbar bzw. entleerbar sind und dass die beiden Teile (31 bzw. 32) des Betätigungskolbens (7) unabhängig voneinander bewegbar sind.

11. Lünette nach Anspruch 9 oder 10,
**dadurch gekennzeichnet,**
**dass** der Verstellweg bzw. Hubweg des ersten Teils (31) des Betätiungskolbens (7) mittels eines Anschlages (36) begrenzt ist.

12. Lünette nach einem der vorgenannten Ansprüche,
**dadurch gekennzeichnet,**
**dass** der Schwenkbereich (23) der beiden äußeren Lünettenarme (11, 12) und der axiale Zustellweg des mittleren Lünettenarms (6) derart bemessen ist, dass die Werkstücke (2) mit einem Durchmesser von 80 bis 600 Millimeter einspannbar sind.

## Claims

1. A stationary support (1) for centring a rotationally symmetrical workpiece (2) in the space,
consisting of:
- two housing shells (4, 5) arranged at a distance from one another and firmly connected together,
- a middle stationary support arm (6) arranged between the two housing shells (4, 5) that is mounted in the housing shells (4, 5) by means of an actuation piston (7) so as to be moved in an axial direction (3) towards the workpiece (2), and
- two outer stationary support arms (11, 12) that are in a driving connection with the middle stationary support arm (6) by means of a guide slide (13) which has a control track (14) on two opposite outside sides, on which a roller (16) attached to the free ends (15) of both outer stationary supports (11, 12) is arranged which roll along the control track (14),
**characterised in that,**
the particular control track (14) of the guide slide (13) has at least two control sections (21, 22, 25) and that at least two rollers (16) spaced apart from one another are provided on the particular outer stationary support arm (11, 12), which are in an active contact with one each of the control sections (21, 22, 25) depending on the position of the guide slide (13) in the housing shells (4, 5).

2. The stationary support in accordance with Claim 1,
**characterised in that,**
the control sections (21, 22, 25) of the particular control track (14) have a different pitch or gradient in relation to one another and the longitudinal axis (10) of the housing shells (4, 5), and that the transitional area (24) between two adjacent control sections (21, 22 or 25) is configured in such a way that, in the transitional area (24), both adjacent rollers (16) of one of the outer stationary support arms (11 or 12) make simultaneous contact with the particular control section (21, 22 or 25).

3. The stationary support in accordance with Claim 2,
**characterised in that,**
the axial advance movement of the guide slide (13) generates the active contact or touching of the rollers (16) against the particular control section (21, 22, 25) of the control track (14), and that the contact between the roller (16) located furthest away from the workpiece (2) is disconnected as soon as the guide slide (13) advances further in the direction of the workpiece (2).

4. The stationary support in accordance with one of the aforementioned claims,
**characterised in that,**
the length of the control track (14) approximately corresponds to the distance between two adjacent rollers (16).

5. The stationary support in accordance with one of the aforementioned claims,
**characterised in that,**
the outsides of the guide slide (13) forming the control track (14) are arranged in the direction of the longitudinal axis (10), in each case with different inclination angle, and that the two opposite control tracks (14) of the guide slide (13) have in principle a V-shaped external contour, the tip of which lies on the longitudinal axis (10) and is adjacent to the workpiece (2) to be clamped.

6. The stationary support in accordance with one of the aforementioned claims,
**characterised in that,**
the particular control section (21, 22, 25) is configured in a straight line, with a concave or convex curvature, or is undulating.

7. The stationary support in accordance with one of the aforementioned claims,
**characterised in that,**
the two outer stationary support arms (11, 12) are mounted on a joint (17) in a rotating arrangement on the housing shells (4, 5), and that the joint (17) is arranged spatially between the guide slide (13) and the workpiece (2) to be clamped.

8. The stationary support in accordance with one of the aforementioned claims,
**characterised in that,**
the two outer stationary support arms (11, 12) are under preloaded which is, in a preferred embodiment, generated by a spiral spring or a coiled compression spring, by means of which the particular roller (16) of the stationary support arms (11, 12) is pressed in the direction of the control track (14) of the guide slide (13).

9. The stationary support in accordance with one of the aforementioned claims,
**characterised in that,**
the actuation piston (7) is formed from a first part (31) and a second part (32) which are mounted one inside the other in a telescoping arrangement, and that the two parts (31, 32) of the actuation piston (7) are each allocated to pressure spaces (33 or 34) which are each separated from one another.

10. The stationary support in accordance Claim 9,
**characterised in that,**
the two pressure spaces (33 and 34) can be filled with a pressurised medium or emptied independently from one another, and that the two parts (31 or 32) of the actuation piston (7) can be moved independently from one another.

11. The stationary support in accordance with Claim 9 or 10, **characterised in that,**
the adjustment travel or stroke travel of the first part (31) of the actuation piston (7) is limited by a stop (36).

12. The stationary support in accordance with one of the aforementioned claims,
**characterised in that,**
the swivelling range (23) of the two outer stationary support arms (11, 12) and the axial advance travel of the middle stationary support arm (6) are of a size such that workpieces (2) with diameters from 80 to 600 mm can be clamped.

## Revendications

1. Lunette (1) pour le centrage d'une pièce à usiner à symétrie de rotation (2) dans l'espace,
comprenant :
- deux boîtiers (4, 5) espacés entre eux et rigidement liés ensemble,
- un bras de lunette central (6) disposé entre les deux boîtiers (4, 5) qui, moyennant un piston d'actionnement (7), se laisse déplacer dans le sens axial (3) en direction de la pièce à usiner (2) dans les deux boîtiers (4, 5), et
- deux bras de lunette extérieurs (11, 12) liées par entraînement avec le bras de lunette central (6) par l'intermédiaire d'un chariot de guidage (13), qui comporte, sur deux faces extérieures opposées, une piste de commande (14) sur laquelle il est prévu un galet (16) monté sur les extrémités libres (15) des deux bras de lunette extérieurs (11, 12) et roulant sur la piste de commande (14),
**caractérisée en ce que**
la piste de commande respective (14) du chariot de guidage (13) comprend au moins deux sections de commande (21, 22, 25) et que sur le bras de lunette extérieur respectif (11, 12), il est prévu au moins deux galets (1) espacés entre eux qui, en dépendance de la position du chariot de guidage (13) dans les boîtiers (4, 5) entrent en contact actif avec respectivement une des sections de commande (21, 22, 25).

2. Lunette d'après la revendication 1,
**caractérisée en ce que**,
référé à l'axe longitudinal (10) des boîtiers (4, 5), les sections de commande (21, 22, 25) de la piste de commande respective (14) ont des pentes ou inclinaisons différentes l'une par rapport à l'autre et que la partie de transition (24) entre deux sections de commande voisines (21, 22 ou 25) est conçue de sorte dans la partie de transition (24), les deux galets voisins (16) d'un des bras de lunette extérieurs (11 ou 12) portent simultanément sur la section de commande respective (21, 22 ou 25).

3. Lunette d'après la revendication 2,
**caractérisée en ce que**
le mouvement d'avance axial du chariot de guidage (13) assure le contact actif ou la portée des galets (6) sur la section de commande respective (21, 22, 25) de la piste de commande (14) et que la portée du galet (16) le plus éloigné de la pièce à usiner (2) est dissoute dès que le chariot de guidage (13) a avancé en direction de la pièce à usiner (2).

4. Lunette d'après une des revendications précédentes,
**caractérisée en ce que**
la longueur de la piste de commande (14) correspond à peu près à la distance entre deux galets voisins (16).

5. Lunette d'après une des revendications précédentes,
**caractérisée en ce que**
les faces extérieures du chariot de guidage (13) formant la piste de commande (14) sont inclinées sous différents degrés en direction de l'axe longitudinal (10) et que les deux pistes de commande opposées (14) du chariot de guidage (13) ont essentiellement un contour extérieur en V dont la pointe se trouve sur l'axe longitudinal (10) et au voisinage de la pièce à usiner (2) serrée.

6. Lunette d'après une des revendications précédentes,
**caractérisée en ce que**
la section de commande respective (21, 22, 25) a une forme droite, concave, convexe, courbée ou ondulée.

7. Lunette d'après une des revendications précédentes,
**caractérisée en ce que**
moyennant une articulation (17), les deux bras de lunette extérieurs (11, 12) sont logés de manière pivotante sur les boîtiers (4, 5) et que cette articulation (17) est arrangée entre le chariot de guidage (13) et la pièce à usiner (2) serrée.

8. Lunette d'après une des revendications précédentes,
**caractérisée en ce que**
les deux bras de lunette extérieurs (11, 12) sont précontraints sous une tension réalisée de préférence par un ressort hélicoïdal ou un ressort hélicoïdal à pression qui refoule le galet respectif (16) des bras de lunette (11, 12) en direction de la piste de commande (14) du chariot de guidage (13).

9. Lunette d'après une des revendications précédentes,
**caractérisée en ce que**
le piston d'actionnement (7) se compose d'une première partie (31) et d'une deuxième partie (32) qui s'emboîtent à la manière d'un télescope et que les deux parties (31, 32) du piston d'actionnement (7) sont assignées respectivement à une chambre de pression individuelle (33 ou 34).

10. Lunette d'après la revendication 9,
**caractérisée en ce que**
les deux chambres de pression (33 ou 34) se laissent indépendamment remplir et vider d'un milieu de pression et que les deux parties (31 ou 32) du piston d'actionnement (7) se laissent mouvoir indépendamment l'une de l'autre.

11. Lunette d'après les revendications 9 ou 10,
**caractérisée en ce que**
la course de la première partie (31) du piston d'actionnement (7) est limitée par une butée (36).

12. Lunette d'après une des revendications précédentes,
**caractérisée en ce que**
la plage de pivotement (23) des deux bras de lunette extérieurs (11, 12) et la course d'avance axiale du bras de lunette central (6) sont conçues de sorte qu'il soit possible de serrer des pièces à usiner (2) d'un diamètre entre 80 et 600 mm.
